# EUROPEAN PATENT APPLICATION

(11) **EP 3 796 233 A1**
(43) Date of publication of application: **24.03.2021**
(21) Application number: 20192763.9
(22) Date of filing: 25.08.2020
(51) Int. Cl.: G06N 3/08, G06N 3/04, G06N 3/063

(54) **INFORMATION PROCESSING DEVICE AND METHOD, AND PROGRAM**

(30) Priority: 13.09.2019 JP 2019167657
(71) Applicant: FUJITSU LIMITED, Kanagawa 211-8588 (JP)
(72) Inventor: SAKAI, Yasufumi, Kawasaki-shi, Kanagawa 211-8588 (JP)
(74) Representative: Haseltine Lake Kempner LLP

(57) **Abstract**

An information processing device includes a bit range determination unit configured to determine a plurality of bit ranges after quantization for at least one of a plurality of types of variables to be used in a neural network; a recognition rate calculation unit configured to calculate a plurality of recognition rates of the neural network by using each of a plurality of variable groups which includes the plurality of types of variables, and in which a bit range of at least one of the plurality of types of variables is different; and a variable determination unit configured to determine to use a variable group of the plurality of variable groups, the variable group having a maximum recognition rate among the plurality of calculated recognition rates, for calculation of the neural network.

## Description

### FIELD

The embodiments discussed herein are related to an information processing device, an information processing method, and a program.

### BACKGROUND

By quantizing variables to be used in a neural network and carrying out arithmetic operations thereon, the amount of arithmetic operations is reduced and the amount of memory used is reduced as compared with a case where arithmetic operations are carried out using floating-point numbers. For example, there is proposed a method in which a fixed-point representation of a variable for each channel is determined based on a statistical portion for each channel of a floating-point variable generated by pre-training (for example, see Japanese Laid-open Patent Publication No. 2019-32833). In addition, a method is proposed in which update values of fixed-point weights used for arithmetic operations of a neural network are accumulated, and when the accumulated value is equal to or greater than a threshold value, the weights are updated by using the accumulated update values (for example, see Japanese Laid-open Patent Publication No. 2019-79535).

There is proposed a method in which processing results by pooling processing after convolution operation of a neural network are integrated to calculate an average value and a standard deviation, and a result of the pooling processing is subjected to normalization processing in the arithmetic operations of the next layer by using the calculated average value and standard deviation (for example, see Japanese Laid-open Patent Publication No. 2017-156941).

For example, Japanese Laid-open Patent Publication No. 2019-32833, 2019-79535,2017-156941 and the like are disclosed.

### SUMMARY

### [TECHNICAL PROBLEM]

When a variable to be used in a neural network is quantized, the amount of arithmetic operations and the amount of memory used are reduced, and the calculation time is shortened. However, the accuracy of the calculation of the neural network is lowered. When the accuracy of the calculation is lowered, the accuracy of the learning of the neural network is lowered, and for example, a recognition rate may deteriorate in inference processing using the neural network after the learning.

It is desirable to reduce the deterioration in a recognition rate when calculations of a neural network are carried out using quantized variables.

### [SOLUTION TO PROBLEM]

According to an embodiment of one aspect, an information processing device includes a bit range determination unit configured to determine a plurality of bit ranges after quantization for at least one of a plurality of types of variables to be used in a neural network; a recognition rate calculation unit configured to calculate a plurality of recognition rates of the neural network by using each of a plurality of variable groups which includes the plurality of types of variables, and in which a bit range of at least one of the plurality of types of variables is different; and a variable determination unit configured to determine to use a variable group of the plurality of variable groups, the variable group having a maximum recognition rate among the plurality of calculated recognition rates, for calculation of the neural network.

### BRIEF DESCRIPTION OF DRAWINGS

FIG. 1 is a block diagram illustrating an example of an information processing device according to an embodiment;
FIG. 2 is an explanatory diagram illustrating an outline of a neural network;
FIG. 3 is an explanatory diagram illustrating an example of numerical representations by using fixed points;
FIG. 4 is an explanatory diagram illustrating an example of operations of a bit range determination unit in FIG. 1;
FIG. 5 is an explanatory diagram illustrating an outline of learning of a neural network by the information processing device illustrated in FIG. 1;
FIG. 6 is a flowchart illustrating an example of learning of a neural network by the information processing device illustrated in FIG. 1;
FIG. 7 is an explanatory diagram illustrating an example of transitions in recognition rates when learning of a neural network is executed;
FIG. 8 is a block diagram illustrating an example of an information processing device according to another embodiment;
FIG. 9 is an explanatory diagram illustrating an example of operations of a statistical information acquisition unit and a bit range determination unit in FIG. 8;
FIG. 10 is an explanatory diagram illustrating an outline of learning of a neural network by the information processing device illustrated in FIG. 8;
FIG. 11 is a flowchart illustrating an example of learning of a neural network by the information processing device illustrated in FIG. 8;
FIG. 12 is a block diagram illustrating an example of an information processing device according to another embodiment; and
FIG. 13 is an explanatory diagram illustrating an example in which a quantization error is calculated by a quantization error calculation unit in FIG. 12.

### [ADVANTAGEOUS EFFECTS OF INVENTION]

In an embodiment of one aspect, it may be possible to reduce the deterioration in a recognition rate when calculations of a neural network are carried out using quantized variables.

### DESCRIPTION OF EMBODIMENTS

Hereinafter, embodiments are described, by way of example only, with reference to the drawings.

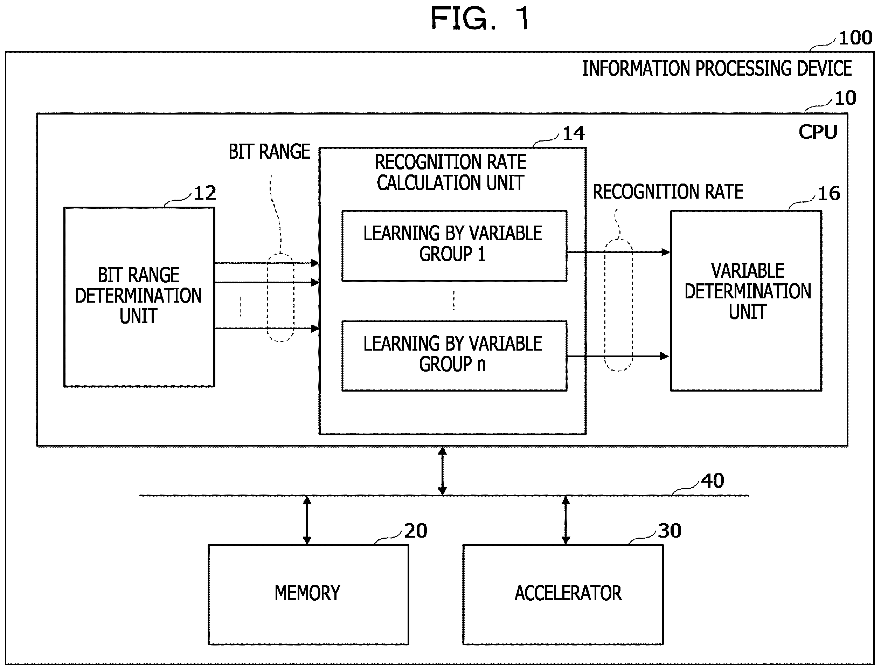

FIG. 1 illustrates an example of an information processing device according to an embodiment. An information processing device 100 illustrated in FIG. 1 is used for learning or inference of image processing or the like using a neural network, for example.

The information processing device 100 includes a central processing unit (CPU) 10, a memory 20, and an accelerator 30 that are coupled to one another via a communication bus 40. The information processing device 100 may include another processor, instead of the CPU 10. The information processing device 100 may include elements other than those illustrated in the drawing, and the information processing device 100 may not include the accelerator 30 and may make the CPU 10 execute calculation processing to be executed by the accelerator 30.

The CPU 10 includes a bit range determination unit 12, a recognition rate calculation unit 14, and a variable determination unit 16. The CPU 10 further includes an arithmetic unit (not illustrated). In FIG. 1, the bit range determination unit 12, the recognition rate calculation unit 14, and the variable determination unit 16 are achieved by the CPU 10 executing an information processing program stored in the memory 20.

At least one of the bit range determination unit 12, the recognition rate calculation unit 14, and the variable determination unit 16 may be implemented by hardware. In this case, the bit range determination unit 12, the recognition rate calculation unit 14, and the variable determination unit 16 may not be included in the CPU 10, but included in a field-programmable gate array (FPGA), an application-specific integrated circuit (ASIC), or the like (not illustrated).

The bit range determination unit 12 determines a plurality of bit ranges when quantized for at least one of a plurality of types of variables to be used in the neural network. For example, the plurality of types of variables includes a weight, an activity, and a gradient.

The recognition rate calculation unit 14 causes the accelerator 30 to execute learning of the neural network by using each of a plurality of variable groups including the plurality of types of variables and having different bit ranges of the variables, and calculates each recognition rate in the neural network. Each of the plurality of variable groups includes any of the plurality of bit ranges of the determination target variable for which the plurality of bit ranges is determined. For example, at least one of the determination target variables included in each of the plurality of variable groups has a different bit range from one another.

The variable determination unit 16 determines to use a variable group having a maximum recognition rate among a plurality of recognition rates calculated by the recognition rate calculation unit 14 for subsequent learning of the neural network. Examples of operations of the bit range determination unit 12, the recognition rate calculation unit 14, and the variable determination unit 16 will be described later.

The memory 20 stores various programs such as an operating system (OS), an application program and an information processing program, and also stores data, variables, and the like to be used in neural network processing. When the bit range determination unit 12, the recognition rate calculation unit 14, and the variable determination unit 16 are implemented by the information processing program executed by the CPU 10, the memory 20 stores the information processing program.

The accelerator 30 is, for example, a graphics processing unit (GPU), a digital signal processor (DSP), or a dedicated processor for deep learning, and is capable of executing calculation of the neural network. For example, the accelerator 30 may include a large number of fixed-point arithmetic units (not illustrated), and may not include a floating-point arithmetic unit. The accelerator 30 may include a large number of fixed-point arithmetic units and a large number of floating-point arithmetic units which are not illustrated.

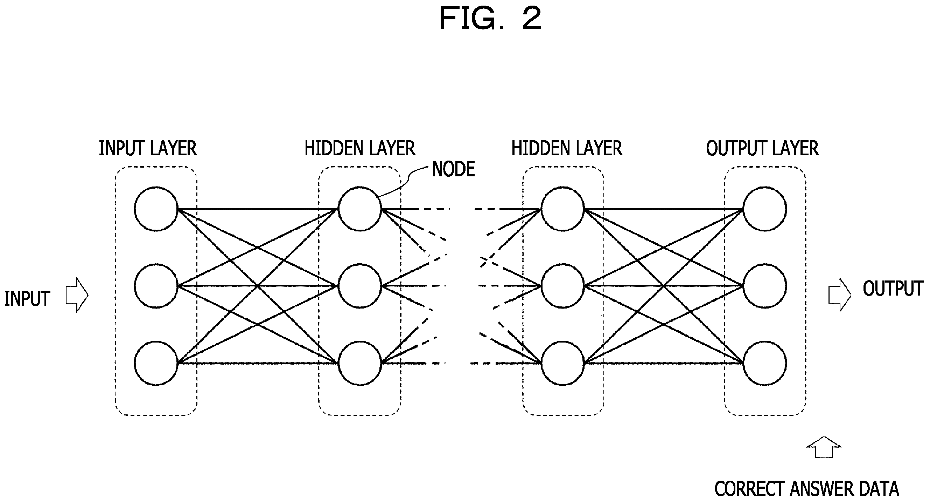

FIG. 2 illustrates an outline of a neural network. The neural network illustrated in FIG. 2 is a deep neural network including a plurality of hidden layers between an input layer and an output layer. Examples of the hidden layer include a convolutional layer, a pooling layer, a fully connected layer, or the like. Circles illustrated in each layer indicate nodes, each of which executes a predetermined calculation.

For example, the information processing device 100 inputs each of a plurality of pieces of learning data (input data) included in a mini-batch to the input layer, and sequentially executes calculations of the convolutional layer, the pooling layer, and the like, thereby carrying out forward propagation processing in which the information obtained by the arithmetic operations is sequentially transmitted from the input side to the output side. The mini-batch is obtained by dividing a data set (batch) to be used for learning into a plurality of pieces, and it includes a predetermined number of pieces of input data (image data or the like). For example, in the convolutional layer, activities which are output data (intermediate data) from the previous layer, and weights prepared in advance as learning data are subjected to a convolutional arithmetic operation, and activities which are output data obtained by the convolutional arithmetic operation are output as input data of the next layer.

After the execution of the forward propagation processing by the mini-batch, backward propagation processing is executed to calculate gradients in order to reduce a difference (for example, a square sum of errors) between output data output from the output layer and correct answer data. Subsequently, update processing to update variables such as weights is carried out based on the execution of the backward propagation processing. For example, as an algorithm for determining an update width of the weight to be used for the calculation of the backward propagation processing, a method of gradient descent is used. For example, after the variable is updated, a recognition rate (correct answer rate) is calculated by operating the neural network by using data for determination.

In the following, the weights, activities, and gradients to be used in the calculation of the neural network are also referred to as variables. By executing the forward propagation processing, the backward propagation processing, and the update processing of variables in each of the plurality of mini-batches, the recognition rate gradually increases, and the deep neural network is optimized.

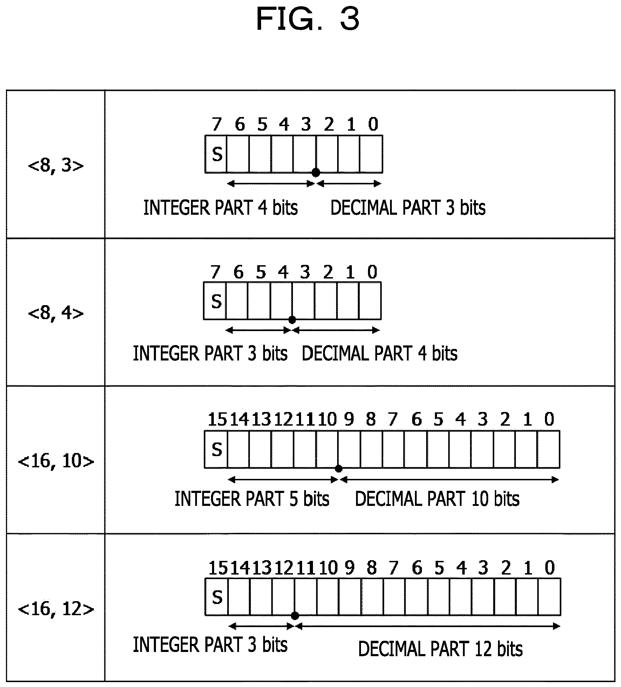

FIG. 3 illustrates an example of numerical representations by using fixed points. In FIG. 3, a reference symbol S indicates a sign bit, and a black circle indicates a decimal point position. As for <a, b> illustrated in the left column in FIG. 3, "a" indicates the number of bits of a fixed-point number, and "b" indicates the number of bits of a decimal part (for example, a decimal point position).

<8, 3> indicates that the fixed-point number has 8 bits, in which the decimal part uses the lower 3 bits, and the integer part uses the upper 4 bits while excluding the sign bit S. <8, 4> indicates that the fixed-point number has 8 bits, in which the decimal part uses the lower 4 bits, and the integer part uses the upper 3 bits while excluding the sign bit S.

<16, 10> indicates that the fixed-point number has 16 bits, in which the decimal part uses the lower 10 bits, and the integer part uses the upper 5 bits while excluding the sign bit S. <16, 12> indicates that the fixed-point number has 16 bits, in which the decimal part uses the lower 12 bits, and the integer part uses the upper 3 bits while excluding the sign bit S.

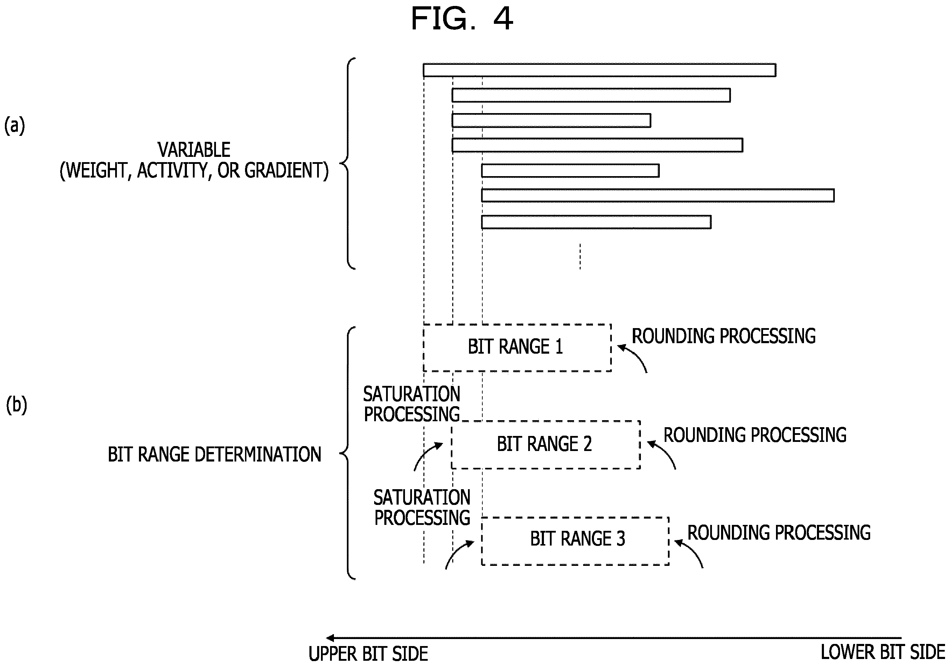

FIG. 4 illustrates an example of operations of the bit range determination unit 12 in FIG. 1. FIG. 4(a) illustrates bit positions (effective bit ranges) of any of variables (weight, activity, and gradient) to be input/output to/from a plurality of nodes of the neural network illustrated in FIG. 2. In FIG. 4(a), the variable takes a positive value and is illustrated without a sign bit. In the fixed-point number data (positive value), the most significant bit is a bit where "1" appears first on the sign bit S side (FIG. 3).

FIG. 4(a) may be any of the variables (weight, activity, and gradient) to be input/output to/from a plurality of nodes indicated by circles in FIG. 2, or may be any of the variables (weight, activity, and gradient) to be input/output to/from one of the nodes. The left side of FIG. 4 indicates the upper bit side, while the right side of FIG. 4 indicates the lower bit side. Accordingly, a variable whose most significant bit is positioned further on the left side is considered to have a larger value.

Intermediate data (the activity, the gradient, or the weight optimized by the learning) output from a certain node is, for example, an arithmetic operation result by the fixed-point arithmetic unit, and is stored in an accumulator (for example, 40 bits) of the fixed-point arithmetic unit every time an arithmetic operation by the node is executed. It is assumed that the initial weight has a predetermined number of bits (8 bits, 16 bits, or the like).

When the initial weight or the intermediate data is floating-point number data, the floating-point number data is converted into fixed-point number data of 40 bits or less, resulting in the state illustrated in FIG. 4(a). The conversion into the fixed-point number data may be executed by the CPU 10 or may be executed by the accelerator 30.

FIG. 4(b) illustrates an example of the bit ranges determined by the bit range determination unit 12. For example, the bit range determination unit 12 determines a plurality of bit ranges (a bit range 1, a bit range 2, and a bit range 3) from the most significant bit side of a variable having a large value. For example, each bit range includes 8 bits, but other numbers of bits may be included, such as 6 bits, 7 bits, or 10 bits.

Further, the bit range determination unit 12 may determine, based on distribution of the most significant bits of the variable, the bit range 1 to the bit range 3 from the most significant bit side of the distribution. At this time, the bit range determination unit 12 may determine, based on the distribution of the most significant bits of the variable, the bit ranges 1 to 3 from the most significant bit side included in an effective range of the distribution.

In FIG. 4(b), the bit range determination unit 12 determines the three bit ranges 1 to 3, but the number of bit ranges to be determined may be equal to or more than two. Although the bit ranges 1 to 3 are shifted by one bit each, the number of shifted bits of the bit ranges is not limited to one.

For example, the effective range of the distribution is set by excluding a predetermined ratio of variables with respect to the total number of variables from the distribution in descending order of magnitude of the values. By determining the plurality of bit ranges based on the distribution of the most significant bits of the variable, it is possible to reduce a quantization error with respect to the original variable (for example, floating-point type) before quantization, compared to a case where the distribution of the most significant bits is not used. As a result, it is possible to reduce the deterioration in the recognition rate obtained by the learning of the neural network.

By determining a plurality of bit ranges from the most significant bit side of the distribution within the effective range of the distribution of the most significant bits, it is possible to determine the plurality of bit ranges by using a region in which the appearance frequency of the variable is high in the distribution. As a result, in the calculation of the neural network, it is possible to reduce an error between a case where the quantized variable is used and a case where the original variable before quantization is used, and it is also possible to execute the learning while suppressing a decrease in accuracy. This makes it possible to reduce the deterioration in the recognition rate.

When quantizing a variable into a bit range, the information processing device 100 carries out saturation processing in which bits on the upper side relative to the most significant bit of the bit range are taken into the bit range and rounding processing in which bits on the lower side relative to the least significant bit of the bit range are taken into the bit range.

When the bit range determination unit 12 determines the bit range based on the distribution of the most significant bits of the variable, the information processing device 100 may include a statistical information acquisition unit configured to acquire the distribution of the most significant bits of the variable. In this case, the statistical information acquisition unit may acquire the distribution of the most significant bits of only the determination target variable of the plurality of bit ranges.

The bit range determination unit 12 may determine a plurality of bit ranges in ascending order of quantization errors when a variable is quantized into the plurality of bit ranges. In this case, the information processing device 100 may include a quantization error calculation unit configured to calculate quantization errors when a variable is quantized into the plurality of bit ranges. The quantization error calculation unit may calculate quantization errors only for the determination target variable of the plurality of bit ranges.

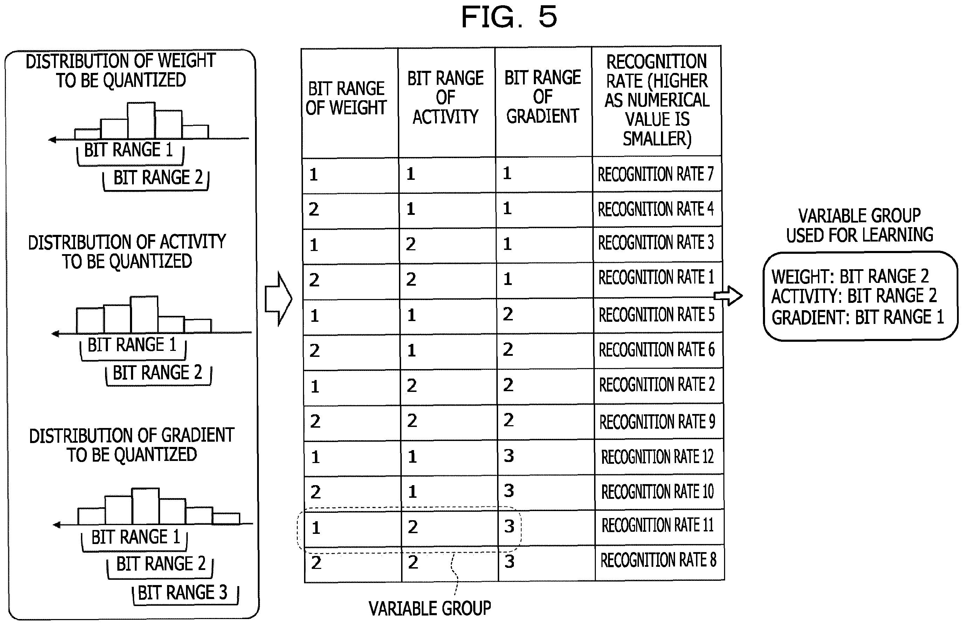

FIG. 5 illustrates an outline of the learning of the neural network by the information processing device 100 illustrated in FIG. 1. In FIG. 5, the bit range determination unit 12 determines a plurality of bit ranges, for each of the weight, activity, and gradient used in the neural network, based on the distribution of the most significant bits of the fixed-point number-type variable acquired in advance.

In the example illustrated in FIG. 5, the weight is determined to be in a bit range 1 and a bit range 2, the activity is determined to be in a bit range 1 and a bit range 2, and the gradient is determined to be in a bit range 1, a bit range 2, and a bit range 3. The bit ranges 1 of the weight, activity, and gradient may be the same, or may be different from one another. Similarly, the bit ranges 2 of the weight, activity, and gradient may be the same, or different from one another.

The recognition rate calculation unit 14 generates a plurality of variable groups by combining the bit ranges of each variable determined by the bit range determination unit 12. Numbers of the weight, activity, and gradient of the variable groups illustrated in FIG. 5 are bit range numbers indicating the bit ranges. The generation of the variable groups may be executed by another functional unit of the CPU 10. The recognition rate calculation unit 14 calculates a recognition rate based on the learning executed by the accelerator 30 under the control of the CPU 10, for each of the plurality of variable groups, using the variables of the bit ranges selected in the variable group. The recognition rate may be calculated by using data for evaluation. The variable determination unit 16 determines the variable group having a maximum recognition rate among a plurality of recognition rates calculated by the recognition rate calculation unit 14, as a variable group to be used for subsequent learning.

FIG. 5 illustrates an example in which the bit range determination unit 12 determines the bit ranges based on the overall distribution of a plurality of weights (or activities, gradients) respectively used in a plurality of layers included in the neural network. However, the bit range determination unit 12 may determine the bit ranges based on the distribution of a plurality of weights (or activities, gradients) used in a predetermined number of layers. For example, when there are two weight distributions, a plurality of bit ranges is determined for each of the two distributions. In this case, the number of variable groups becomes 24, which is twice the number in FIG. 5. The number of variable groups increases as the number of distributions increases.

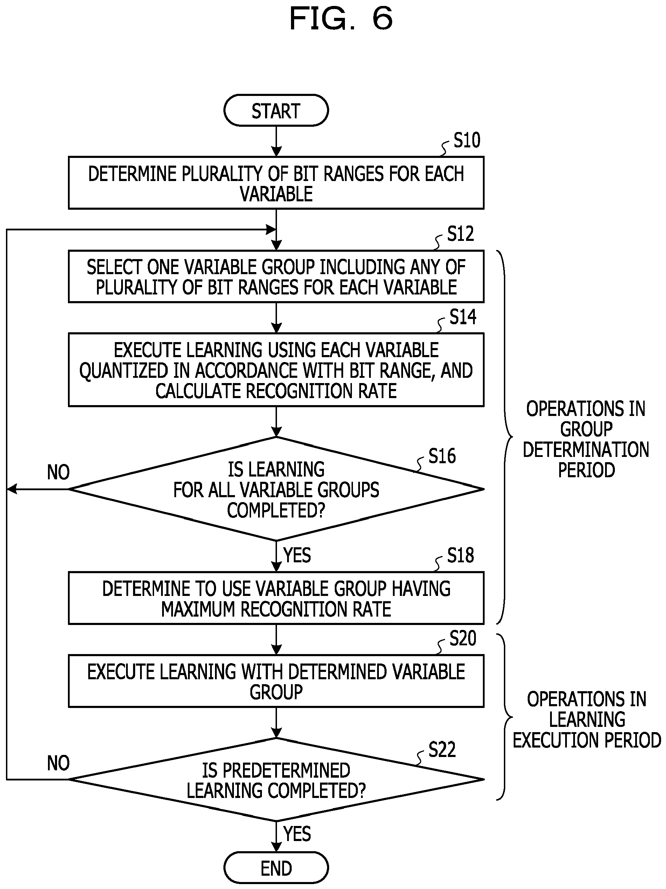

FIG. 6 illustrates an example of the learning of the neural network by the information processing device 100 illustrated in FIG. 1. A process illustrated in FIG. 6 is implemented by the CPU 10 executing the information processing program. For example, FIG. 6 illustrates an example of a control method for the information processing device 100 and a control program for the information processing device 100. In FIG. 6, a learning cycle including operations in a group determination period (Steps S12 to S18) and operations in a learning execution period (Steps S20 and S22) is repeatedly executed until the learning of a predetermined data set is completed (until a predetermined recognition rate is obtained).

The learning execution period is an example of a calculation execution period in which calculation of the neural network is executed using the variable group determined in the group determination period. The learning cycle in which the operations in the group determination period and the operations in the learning execution period are executed is an example of a calculation cycle and corresponds to, for example, a predetermined epoch number. One epoch indicates one-time learning corresponding to a data set input by a user.

First, in Step S10, the information processing device 100 determines a plurality of bit ranges for each variable. Processing in Step S10 is carried out by the bit range determination unit 12. Next, in Step S12, the information processing device 100 selects one variable group including any of a plurality of bit ranges for each variable. Processing in Step S12 is executed by the recognition rate calculation unit 14 or another functional unit of the CPU 10.

Next, in Step S14, the information processing device 100 executes the learning of the neural network using each variable quantized in accordance with the bit range corresponding to the selected variable group, and calculates a recognition rate. Processing in Step S12 is carried out by the recognition rate calculation unit 14.

Next, in Step S16, the information processing device 100 determines whether the learning of the neural network using the variables of all the variable groups is completed. When the learning using the variables of all the variable groups is completed, the process proceeds to Step S18. When there is a variable group that has not been used for the learning, the process returns to Step S12 in order to execute the learning using the variables of the variable group that has not been used for the learning.

In a case where the information processing device 100 recognizes in advance that there are several variable groups having similar recognition rates among the plurality of variable groups, the information processing device 100 may execute the learning by using any of the variable groups having similar recognition rates as a representative. In this case, the number of times of the learning may be reduced, so that the learning time may be reduced.

As described in FIG. 5, when the bit ranges are determined based on the distribution of a plurality of weights (or activities, gradients) used in a predetermined number of layers, the number of variable groups increases as the number of distributions increases. Therefore, as the number of distributions increases, the learning time consumed in the learning of the plurality of variable groups increases. Because of this, when the number of distributions becomes larger than a preset number, the information processing device 100 may limit the number of variable groups used for the learning. The limitation of the number of variable groups may be made by randomly selecting distribution, or may be made by excluding, from the learning, a variable group whose recognition rate is expected to be lower than other groups based on the recognition rates obtained by the past learning.

Next, in Step S18, the information processing device 100 determines to use a variable group having a maximum recognition rate among the plurality of recognition rates calculated in Step S14, for subsequent learning. Processing in Step S18 is carried out by the variable determination unit 16. Next, in step S20, the information processing device 100 executes the learning in the learning execution period using the variables of the variable group determined in Step S18.

Next, in step S22, when the information processing device 100 has executed the learning (one epoch) corresponding to a data set input by the user a predetermined number of times, for example, the process illustrated in FIG. 6 is ended. In the case where the learning has not been executed the predetermined number of times, the information processing device 100 returns the process to Step S12 and executes the operations of the next learning cycle (group determination period + learning execution period).

In the present embodiment, in the group determination period set in the first half of the learning cycle, the use of the variable group that brings the maximum recognition rate among the plurality of variable groups is determined, and the determined variable group is used for the learning in the learning execution period set in the second half of the learning cycle. As a result, it is possible to raise the possibility of improving the recognition rate as compared with the case where the learning cycle is repeatedly executed while being fixed to one variable group. In addition, in each of the plurality of learning cycles, by determining the variable group having the maximum recognition rate before the learning execution period, it is possible to raise the possibility of improving the recognition rate as compared to the case of using the variable group having the non-maximum recognition rate in each learning execution period.

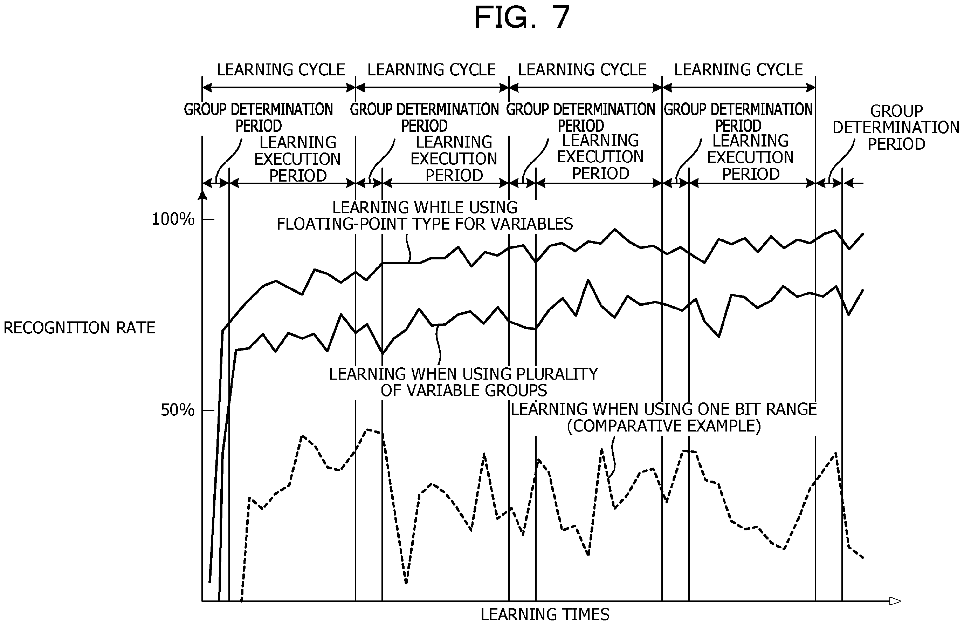

FIG. 7 illustrates an example of transitions in recognition rates when learning of a neural network is executed. For example, FIG. 7 illustrates an example in which learning of resnet-50, which is a type of learned network, is executed by using ImageNet, which is a type of data set, where the horizontal axis indicates the number of learning times and the vertical axis indicates a recognition rate.

As described with reference to FIG. 5, the information processing device 100 executes the learning using a plurality of variable groups having different combinations of bit ranges of a plurality of types of variables in the group determination period of each learning cycle, and executes the learning in the learning execution period using a variable group having the maximum recognition rate. As a result, it is possible to obtain the transition of the recognition rate (thick solid line) close to the transition of the recognition rate (solid line) in the case of executing the learning of the neural network using the floating-point type for the variables, and it is possible to lower the possibility that the recognition rate deteriorates. Even when the fixed-point type is used for the variables, the recognition rate may be gradually improved by continuing the learning.

Since the floating-point type data is converted into the fixed-point type data by quantization and then the learning is executed, the calculation time is shortened and the memory usage is reduced. Accordingly, by executing the learning while using a plurality of variable groups (fixed-point type) in which combinations of bit ranges of a plurality of types of variables are different, it is possible to reduce the calculation time while reducing the deterioration in the recognition rate.

In contrast, as illustrated in a comparative example (broken line), when learning of the neural network is executed using one bit range for each fixed-point type variable (for example, one variable group is used), the recognition rate may not be improved even when the learning is repeated. When the learning of the neural network is executed using one variable group, although there exists a learning cycle (for example, predetermined epoch number times of learning), neither a group determination period nor a learning execution period is present.

As described above, in the present embodiment, the information processing device 100 determines a plurality of bit ranges for each variable to be used for learning of the neural network, and executes the learning of the neural network using a plurality of variable groups including any of the plurality of bit ranges for each variable. The information processing device 100 executes the subsequent learning by using the variable group having the maximum recognition rate among the plurality of recognition rates obtained by the learning of the neural network executed by using each of the plurality of variable groups. By executing the learning of the neural network using a variable group having a higher recognition rate than other variable groups, it is possible to reduce the deterioration in the recognition rate as compared to a case where the learning is executed using one bit range for each fixed-point type variable. Even when a fixed-point type is used for a variable, the recognition rate may be gradually improved by continuing the learning.

The information processing device 100 determines the use of a variable group that brings the maximum recognition rate among the plurality of variable groups, in the learning executed in the group determination period that is set in the first half of the learning cycle. The information processing device 100 uses the determined variable group for the learning in the learning execution period that is set in the second half of the learning cycle. As a result, it is possible to raise the possibility of improving the recognition rate as compared with a case where the learning is executed while being fixed to one variable group in the learning cycle.

In addition, in each of the plurality of learning cycles, by determining the variable group having the maximum recognition rate before the learning execution period, it is possible to raise the possibility of improving the recognition rate as compared to the case of using the variable group having the non-maximum recognition rate in each learning execution period. As described above, by executing the learning while using a plurality of variable groups including fixed-point type variables, it is possible to reduce the calculation time while reducing the deterioration in the recognition rate.

By determining a plurality of bit ranges (quantization positions) from the most significant bit side of the distribution based on the distribution of the most significant bits of the fixed-point type variables, it is possible to reduce a quantization error with respect to the original variable before quantization, compared to a case where the distribution of the most significant bits is not used. As a result, it is possible to reduce the deterioration in the recognition rate obtained by the learning of the neural network.

By determining a plurality of bit ranges from the most significant bit side of the distribution within the effective range of the distribution of the most significant bits, it is possible to determine the plurality of bit ranges by using a region in which the appearance frequency of the variable is high in the distribution. As a result, in the calculation of the neural network, it is possible to reduce an error between a case where the quantized variable is used and a case where the original variable before quantization is used, and it is also possible to execute the learning while suppressing a decrease in accuracy. This makes it possible to reduce the deterioration in the recognition rate.

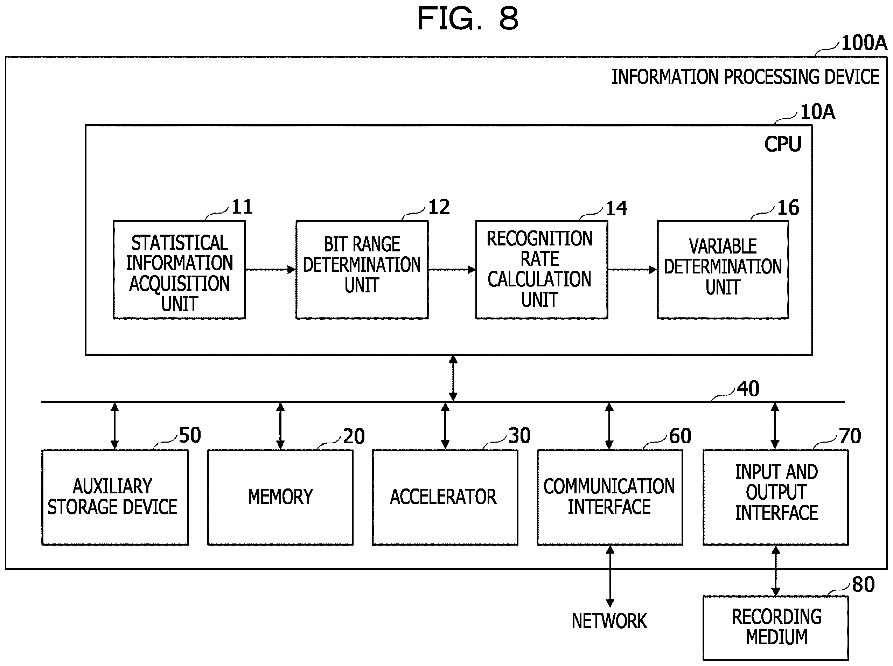

FIG. 8 illustrates an example of an information processing device according to another embodiment. Constituent elements similar to those illustrated in FIG. 1 are denoted by the same reference symbols and detailed description thereof is omitted. Detailed description of contents similar to those in FIG. 2 to FIG. 7 will be omitted. An information processing device 100A illustrated in FIG. 8 is used for learning or inference of image processing or the like by using a neural network, or is used for both learning and inference, for example.

For example, the information processing device 100A is a server, and includes a CPU 10A, a memory 20, an accelerator 30, an auxiliary storage device 50, a communication interface 60, and an input and output interface 70 that are coupled to one another via a communication bus 40. The information processing device 100A may include a constituent element other than the illustrated constituent elements.

The CPU 10A includes a statistical information acquisition unit 11 in addition to the configuration of the CPU 10 illustrated in FIG. 1. The statistical information acquisition unit 11 acquires statistical information for each variable (weight, activity, or gradient) to be used for calculation of the neural network illustrated in FIG. 2. A bit range determination unit 12 determines a plurality of bit ranges for each variable based on the statistical information acquired by the statistical information acquisition unit 11.

The statistical information acquisition unit 11, the bit range determination unit 12, a recognition rate calculation unit 14, and a variable determination unit 16 are achieved by the CPU 10A executing an information processing program stored in the memory 20. At least one of the statistical information acquisition unit 11, the bit range determination unit 12, the recognition rate calculation unit 14, and the variable determination unit 16 may be implemented by hardware.

The auxiliary storage device 50 stores various programs to be executed by the CPU 10A such as an operating system (OS) and an information processing program, and also stores data and various variables such as weights to be used for calculation of the neural network, and the like. For example, the programs stored in the auxiliary storage device 50 are transferred to the memory 20 and are executed by the CPU 10A. The data and various variables to be used for the calculation of the neural network that are stored in the auxiliary storage device 50 are transferred from the auxiliary storage device 50 to the memory 20 when learning of the neural network is executed.

The communication interface 60 has a function of communicating with another information processing device and the like via a network, for example. Therefore, a plurality of information processing devices may be used to execute the calculation of the neural network in parallel. The input and output interface 70 has a function of inputting data from and outputting data to a recording medium 80 to be coupled to the information processing device 100A.

For example, the recording medium 80 is a Compact Disc (CD: registered trademark), a Digital Versatile Disc (DVD: registered trademark), a Universal Serial Bus (USB) memory, or the like, and the information processing program may be recorded therein. The information processing program recorded in the recording medium 80 is transferred to the auxiliary storage device 50 via the input and output interface 70, and then is developed over the memory 20 and executed by the CPU 10A.

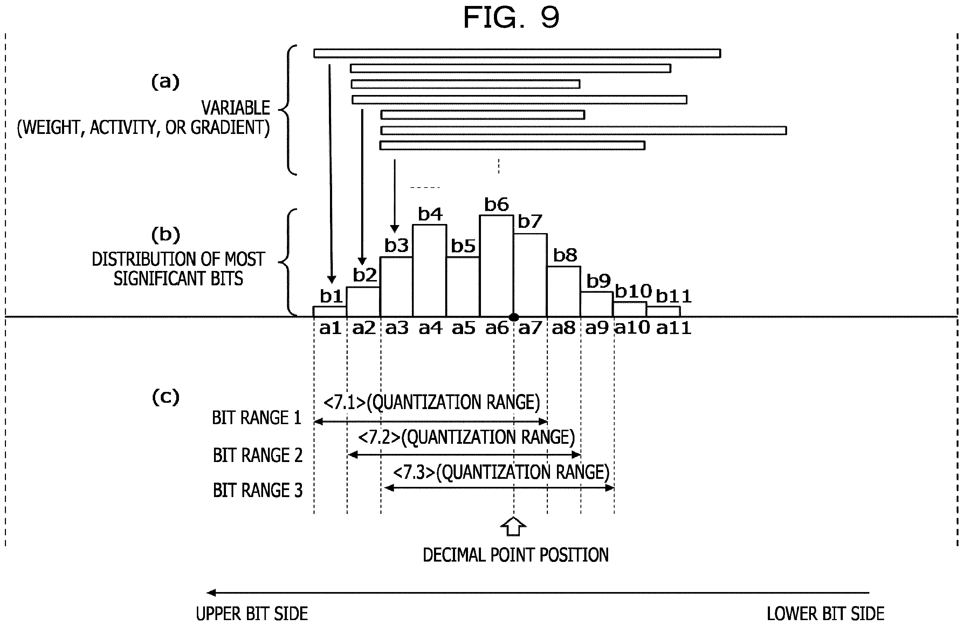

FIG. 9 illustrates an example of operations of the statistical information acquisition unit 11 and the bit range determination unit 12 illustrated in FIG. 8. The left side of FIG. 9 indicates the upper bit side, while the right side of FIG. 9 indicates the lower bit side. Broken lines on both the left and right sides of FIG. 9 indicate a bit range of an accumulator (for example, 40 bits) in which arithmetic operation results by a fixed-point arithmetic unit are stored. Similarly to FIG. 4(a), FIG. 9(a) illustrates any of variables (weight, activity, and gradient) input/output to/from a plurality of nodes of the neural network.

FIG. 9(b) illustrates distribution of the most significant bits of a variable as an example of statistical information to be acquired by the statistical information acquisition unit 11. For example, the distribution of the variable is acquired for each variable (weight, activity, or gradient) used in the neural network. In FIG. 9, each of reference symbols a (a1 to a11) indicates a bit position (for example, a position of the most significant bit of the variable). Each of reference symbols b (b1 to b11) indicates a bin number of the most significant bit of the variable at each bit position.

The bit range determination unit 12 determines a plurality of bit ranges as quantization ranges, based on the distribution of the most significant bits of the variable (FIG. 9(c)). The bit range determination unit 12 may easily determine a plurality of bit ranges (quantization positions) from the most significant bit side of the distribution, by using the distribution of the maximum values for each variable acquired by the statistical information acquisition unit 11.

In this example, the decimal point is set between a bit position indicated by the reference symbol a6 and a bit position indicated by the reference symbol a7. A quantization range of a bit range 1 is set to <7, 1>, a quantization range of a bit range 2 is set to <7, 2>, and a quantization range of a bit range 3 is set to <7, 3>. The bit range determination unit 12 may determine a bit range from the most significant bit side included in an effective range, which is set by excluding a predetermined ratio of variables with respective to the total number of variables from the distribution in descending order of magnitude of the values.

For example, in the bit range 1 where the most significant bit in the distribution coincides with the most significant bit of the bit range, the CPU 10A carries out rounding processing on the bits on the lower side relative to the least significant bit of the bit range 1, and quantizes the variable. On the other hand, in the bit range 2 and the bit range 3 where the bit ranges are included inside the distribution, the CPU 10A carries out saturation processing on the bits on the upper side relative to the most significant bit of the bit range and rounding processing on the bits on the lower side relative to the least significant bit of the bit range, and quantizes the variable.

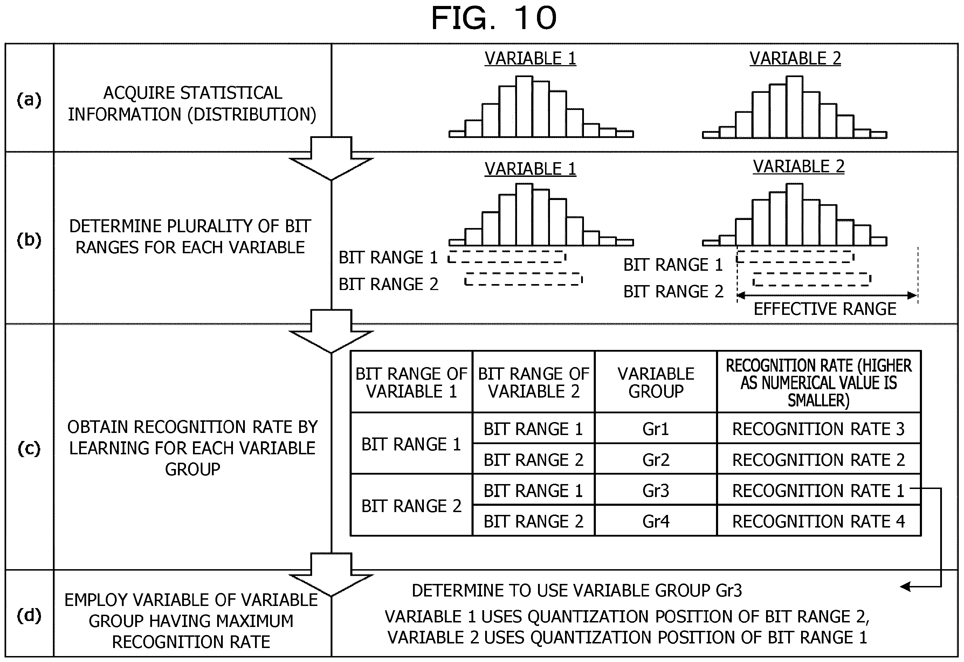

FIG. 10 illustrates an outline of learning of a neural network by the information processing device 100A illustrated in FIG. 8. Detailed description of contents similar to those in FIG. 5 will be omitted herein. In FIG. 10, for the sake of facilitating the understanding of the explanation, it is assumed that the neural network executes the learning by using two variables 1 and 2 (fixed-point number data), and two bit ranges 1 and 2 are determined for each of the variables 1 and 2.

First, in FIG. 10(a), the statistical information acquisition unit 11 acquires distribution of the most significant bits of each of the variables 1 and 2. Next, in FIG. 10(b), the bit range determination unit 12 determines the bit ranges 1 and 2 from the most significant bit side of the distribution for each of the variables 1 and 2. For example, as for the variable 2, the bit range determination unit 12 determines the bit ranges 1 and 2 from the most significant bit side of the distribution within the effective range of the distribution having been set in advance.

Next, in FIG. 10(c), the recognition rate calculation unit 14 generates a plurality of variable groups Gr (Gr1 to Gr4) by combining the bit ranges 1 and 2 of each of the variables 1 and 2 having been determined by the bit range determination unit 12. Subsequently, the recognition rate calculation unit 14 calculates a recognition rate for each variable group Gr based on the learning executed while using the variables of the variable group Gr. As in FIG. 5, the smaller the numerical value, the higher the recognition rate is.

Next, in FIG. 10(d), the variable determination unit 16 determines the variable group Gr3, which has a maximum recognition rate (recognition rate 1) among a plurality of recognition rates calculated by the recognition rate calculation unit 14, as a variable group to be used for subsequent learning.

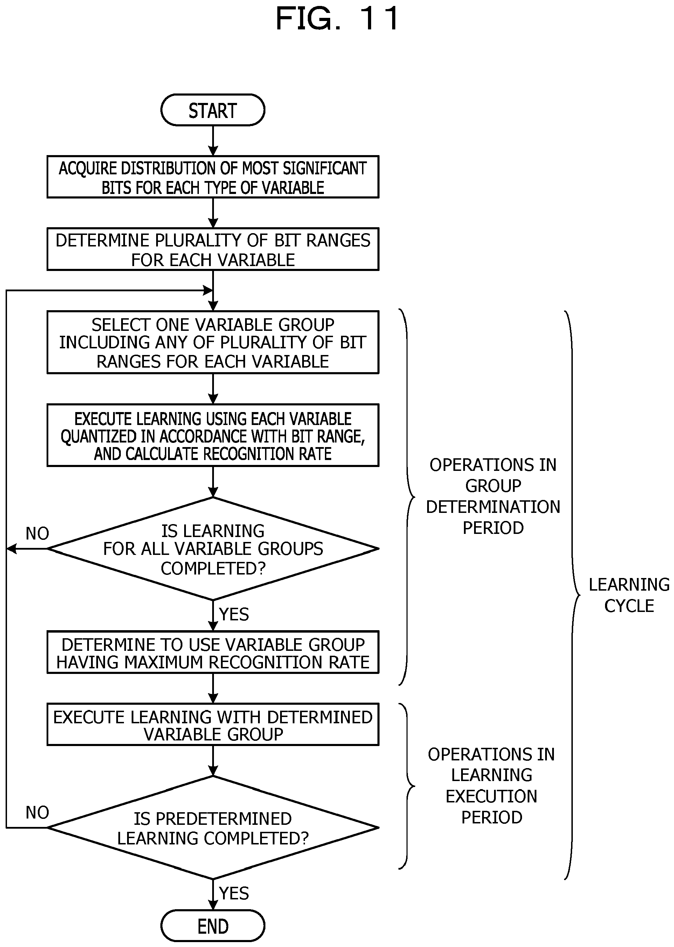

FIG. 11 illustrates an example of learning of the neural network by the information processing device 100A in FIG. 8. Detailed description of processing similar to that illustrated in FIG. 6 will be omitted herein. FIG. 11 is similar to FIG. 6 except that Step S8 is added before Step S10 in FIG. 6.

In step S8, the information processing device 100A acquires distribution of the most significant bits for each type of variable (for example, weight, activity, and gradient) used in the neural network. Processing in Step S8 is carried out by the statistical information acquisition unit 11. In Step S10, the information processing device 100 determines a plurality of bit ranges for each variable based on the distribution of the most significant bits for each type of variable acquired in Step S8.

An example of transitions of recognition rates when learning of the neural network is executed is similar to that in FIG. 7, and in the present embodiment, it is also possible to obtain a transition of the recognition rate close to the transition of the recognition rate when learning of the neural network is executed using a floating-point type for variables. Even when a fixed-point type is used for variables, the recognition rate may be gradually improved by continuing the learning.

Thus, also according to the embodiment described with reference to FIGs. 8 to 11, effects similar to those obtained in the embodiment described with reference to FIGs. 1 to 7 may be obtained. For example, by executing the learning using a variable group having a higher recognition rate than other variable groups, it is possible to reduce the deterioration in the recognition rate when executing the learning of the neural network using quantized variables.

Furthermore, in the embodiment described with reference to FIGs. 8 to 11, the bit range determination unit 12 may easily determine a plurality of bit ranges (quantization positions) from the most significant bit side of the distribution by using the distribution of the maximum values for each variable acquired by the statistical information acquisition unit 11.

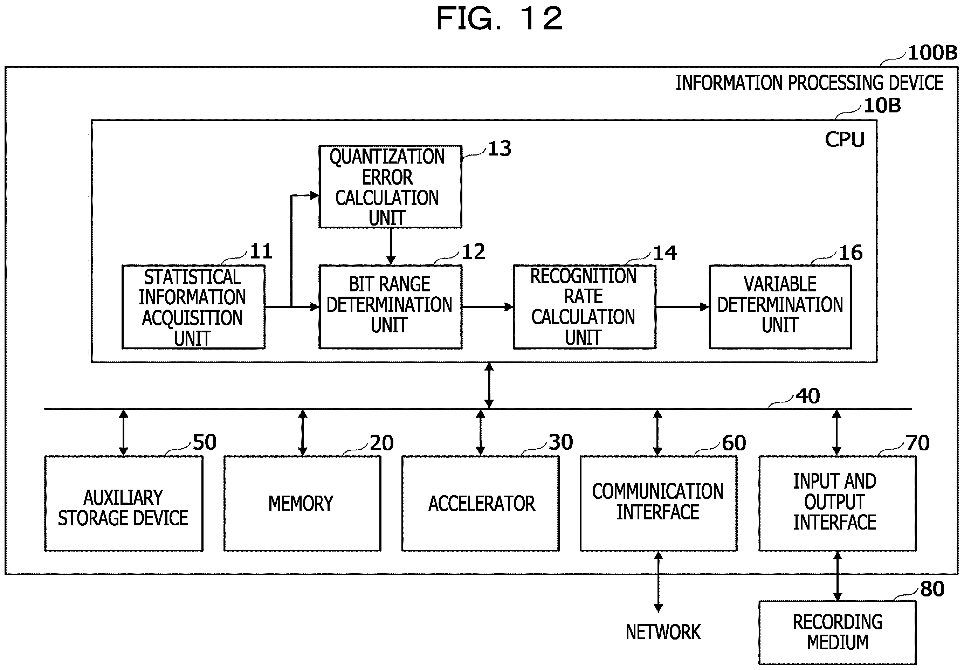

FIG. 12 illustrates an example of an information processing device according to another embodiment. Constituent elements similar to those illustrated in FIGs. 1 and 8 are denoted by the same reference symbols and detailed description thereof is omitted. Detailed description of contents similar to those in FIGs. 2 to 7 and FIGs. 9 to 11 will be omitted. An information processing device 100B illustrated in FIG. 12 is used for learning or inference of image processing or the like by using a neural network, or is used for both the learning and inference, for example.

The information processing device 100B includes a CPU 10B instead of the CPU 10A in FIG. 8. The information processing device 100B is the same as the information processing device 100A in FIG. 8 except that a quantization error calculation unit 13 is added to the CPU 10A. For example, the CPU 10B includes a statistical information acquisition unit 11, a bit range determination unit 12, a recognition rate calculation unit 14, a variable determination unit 16, and the quantization error calculation unit 13. The statistical information acquisition unit 11, the bit range determination unit 12, the recognition rate calculation unit 14, the variable determination unit 16, and the quantization error calculation unit 13 are achieved by the CPU 10B executing an information processing program stored in a memory 20. At least one of the statistical information acquisition unit 11, the bit range determination unit 12, the recognition rate calculation unit 14, the variable determination unit 16, and the quantization error calculation unit 13 may be implemented by hardware.

Based on the distribution of the most significant bits for each variable acquired by the statistical information acquisition unit 11, the quantization error calculation unit 13 calculates a quantization error when quantization is carried out in a plurality of bit ranges for each variable used in the learning of the neural network. For example, the number of the plurality of bit ranges is preferably larger than the number of the plurality of bit ranges determined by the bit range determination unit 12.

The bit range determination unit 12 determines a plurality of bit ranges from the most significant bit side of the distribution of the most significant bits acquired by the statistical information acquisition unit 11 in ascending order of quantization errors calculated by the quantization error calculation unit 13, for each variable used in the learning of the neural network. Accordingly, the bit range determination unit 12 does not necessarily determine the plurality of bit ranges in the order from the most significant bit side of the distribution.

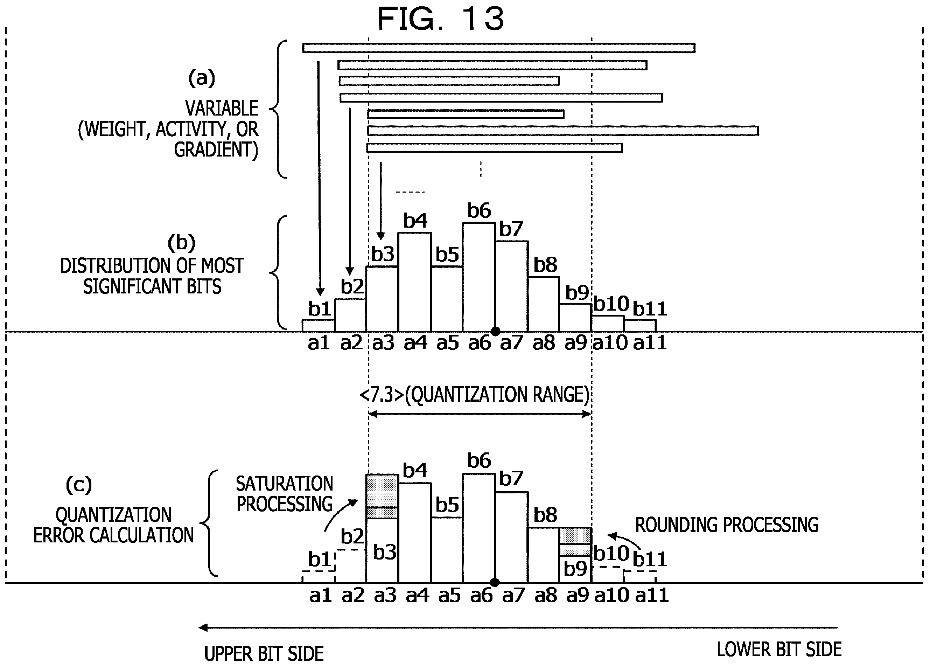

FIG. 13 illustrates an example in which a quantization error is calculated by the quantization error calculation unit 13 in FIG. 12. The left side of FIG. 13 indicates the upper bit side, while the right side of FIG. 13 indicates the lower bit side. Detailed description of contents similar to those in FIG. 4 and FIG. 9 will be omitted herein.

Similarly to FIGs. 4(a) and 9(a), FIG. 13(a) illustrates any of variables (weight, activity, and gradient) input/output to/from a plurality of nodes of the neural network. Similarly to FIG. 9(b), FIG. 13(b) illustrates distribution of the most significant bits of any of the variables acquired by the statistical information acquisition unit 11.

Based on the distribution of the most significant bits of the variable, the quantization error calculation unit 13 calculates a quantization error when the bit range of the variable is set to a predetermined quantization range (FIG. 13(c)). The quantization range is set to <7, 3> in this example, but the quantization error calculation unit 13 calculates a quantization error for each of at least the plurality of quantization ranges illustrated in FIG. 9.

For example, the quantization error is calculated by carrying out saturation processing on the bits positioned on the left side of the most significant bit of the quantization range and carrying out rounding processing on the bits positioned on the right side of the least significant bit of the quantization range. In the example illustrated in FIG. 13(c), the quantization error is calculated by Equation (1). Quantization error = (a1·b1 + a2·b2) - (a3·b1 + a3·b2) + (a10·b10 + a11·b11) - (a9·b10 + a9·b11)(1)

In Equation (1), "·" indicates a product, the first and second terms indicate a saturation error, and the third and fourth terms indicate a rounding error. Then, for example, an average value of the calculated quantization errors for each variable is calculated and is determined as the quantization error to be compared with a threshold value.

In FIG. 13(c), an illustration of the distribution in FIG. 13(b) is used to facilitate understanding of the method of calculating the quantization error, but actually, in each variable in FIG. 13(a), the bits outside the quantization range are subjected to the saturation processing and the rounding processing. In FIG. 13, the quantization error calculation unit 13 calculates the quantization error by carrying out both the saturation processing and the rounding processing, but may calculate the quantization error by carrying out either the saturation processing or the rounding processing.

An example of transitions of recognition rates when learning of the neural network is executed is similar to that in FIG. 7, and in the present embodiment, it is also possible to obtain a transition of the recognition rate close to the transition of the recognition rate when learning of the neural network is executed using a floating-point type for variables. Even when a fixed-point type is used for variables, the recognition rate may be gradually improved by continuing the learning.

As discussed thus far, also in this embodiment, in the same manner as in the above-described embodiment, by executing the learning using a variable group having a higher recognition rate than other variable groups, it is possible to reduce the deterioration in the recognition rate when executing the learning of the neural network using quantized variables. Further, in this embodiment, the quantization error is calculated by the quantization error calculation unit 13, so that the bit range determination unit 12 may determine a plurality of bit ranges in ascending order of quantization errors. Accordingly, in the calculation of the neural network, it is possible to reduce an error between a case where a quantized variable (fixed-point type) is used and a case where the original variable before quantization (floating-point type) is used, and it is also possible to execute the learning while suppressing a decrease in accuracy. As a result, the deterioration in the recognition rate due to the learning of the neural network may be further reduced.

In the above-described embodiment, an example is described in which learning in the group determination period is executed using a plurality of variable groups, and learning in the learning execution period is executed using a variable group having the maximum recognition rate obtained by the learning. However, in a group learning period, a plurality of variable groups to be used for learning in the learning execution period may be determined based on a loss function (Train loss or Test loss) at the time of learning using a plurality of variable groups.

In the above-described embodiment, an example is described in which learning in the group determination period is executed using a plurality of variable groups including any of a plurality of bit ranges for each variable, and learning in the learning execution period is executed using a variable group having the maximum recognition rate obtained by the learning. However, inference of the neural network may be carried out using a plurality of variable groups including any of a plurality of bit ranges for each variable, and the subsequent inference may be carried out using a variable group having the maximum recognition rate obtained by the inference.

In this case, for example, the learning cycles in FIGs. 6, 7, and 11 are changed to inference cycles, and the learning execution periods in FIGs. 6, 7, and 11 are changed to inference execution periods. A length of the inference cycle is set to any length in accordance with an object of inference to be executed by an inference system. Further, "learning" in FIGs. 1, 5, 6, 7, 10, and 11 is changed to "inference".

As a result, also in the inference using the neural network, it is possible to obtain the same effects as in the case of executing the learning in the learning execution period using a variable group having the maximum recognition rate obtained by executing the learning in the group determination period using a plurality of variable groups. For example, by executing the inference using a variable group having a higher recognition rate than other variable groups, it is possible to reduce the deterioration in the recognition rate when executing the inference of the neural network using quantized variables in comparison with a case where the inference is executed using floating-point type variables. Even when a fixed-point type is used for variables, the recognition rate may be gradually improved by continuing the inference.

In the above-described embodiment, an example is described in which a plurality of bit ranges is determined for each type of variable used in the neural network. For example, an example is described in which a plurality of bit ranges common to all weights (or activities or gradients) used in the neural network is determined. However, for example, a plurality of bit ranges may be determined for each type of variable in units of a predetermined number of layers of the neural network. For example, a plurality of bit ranges may be determined for each of a weight (or activity or gradient) used in a certain layer and a weight (or activity or gradient) used in another layer.

A plurality of bit ranges may be determined for a weight (or activity or gradient) used in a certain layer, and one bit range may be determined for a weight (or activity or gradient) used in another layer. For example, a plurality of bit ranges may be determined for a weight and an activity used in the neural network, and one bit range may be determined for a gradient used in the neural network. Which of the variables is to be given a plurality of bit ranges is determined in consideration of a calculation load and an effect of improvement in the recognition rate by the past learning.

The following supplementary appendices are further disclosed related to the embodiments described in FIGs. 1 to 13.
(Appendix 1) An information processing device including a processor, wherein
   the processor is configured to:
   determine a plurality of bit ranges after quantization for at least one of a plurality of types of variables to be used in a neural network;
   calculate recognition rates of the neural network by using each of a plurality of variable groups which includes the plurality of types of variables, and in which a bit range of at least one of the plurality of types of variables is different; and
   determine to use the variable group having a maximum recognition rate among a plurality of the calculated recognition rates, for calculation of the neural network.
(Appendix 2)
   The information processing device according to appendix 1, wherein
   the processor executes the calculation of the neural network in such a manner that the calculation is executed in a plurality of calculation cycles each of which includes a group determination period and a calculation execution period,
   calculating the recognition rates and determining the variable group having the maximum recognition rate are operated in the group determination period, and
   in each of the plurality of calculation cycles, the calculation in the calculation execution period is executed using the variable group determined in the group determination period.
(Appendix 3)
   The information processing device according to appendix 1 or 2, wherein
   the determining of the bit ranges determines, based on distribution of most significant bits when a determination target variable of the plurality of bit ranges is represented by a fixed-point number, the plurality of bit ranges from the most significant bit side of the distribution.
(Appendix 4)
   The information processing device according to appendix 3, wherein
   the determining of the bit ranges determines the plurality of bit ranges from the most significant bit side of the distribution within an effective range of the distribution of the most significant bits.
(Appendix 5)
   The information processing device according to appendix 3 or 4, wherein
   the processor calculates each of quantization errors when the determination target variable of the plurality of bit ranges is quantized in the plurality of bit ranges, and
   the determining of the bit ranges determines the plurality of bit ranges from the most significant bit side of the distribution in ascending order of the calculated quantization errors.
(Appendix 6)
   The information processing device according to any one of appendices 3 to 5, wherein
   the processor acquires distribution of the most significant bits of the determination target variable of the plurality of bit ranges among the plurality of types of variables calculated by the calculation of the neural network.
(Appendix 7)
   The information processing device according to any one of appendices 1 to 6, wherein
   the processor executes learning of the neural network by using the determined variable group having the maximum recognition rate.
(Appendix 8)
   The information processing device according to appendix 7, wherein
   the plurality of types of variables includes a weight, an activity, and a gradient.
(Appendix 9)
   The information processing device according to any one of appendices 1 to 6, wherein
   the processor executes inference of the neural network by using the determined variable group having the maximum recognition rate.
(Appendix 10)
   An information processing method for causing a processor included in an information processing device to execute a process, the process including
   determining a plurality of bit ranges after quantization for at least one of a plurality of types of variables to be used in a neural network;
   calculating recognition rates of the neural network by using each of a plurality of variable groups which includes the plurality of types of variables, and in which a bit range of at least one of the plurality of types of variables is different; and
   determining to use the variable group having a maximum recognition rate among a plurality of the calculated recognition rates, for calculation of the neural network.
(Appendix 11)
   An information processing program for causing a processor included in an information processing device to execute a process, the process including
   determining a plurality of bit ranges after quantization for at least one of a plurality of types of variables to be used in a neural network;
   calculating recognition rates of the neural network by using each of a plurality of variable groups which includes the plurality of types of variables, and in which a bit range of at least one of the plurality of types of variables is different; and
   determining to use the variable group having a maximum recognition rate among a plurality of the calculated recognition rates, for calculation of the neural network.

Features and advantages of the embodiments would be apparent from the foregoing detailed description. The scope of the claims is intended to cover the features and advantages of the embodiments as described above without departing from the scope of the claims. Any person having ordinary knowledge in the art may readily conceive of any improvements and changes. Accordingly, there is no intention to limit the scope of the inventive embodiments to those described above, and it is also possible to derive from appropriate modifications and equivalents included in the scope disclosed in the embodiments.

In any of the above aspects, the various features may be implemented in hardware, or as software modules running on one or more processors/computers.

Embodiments of the invention also provide a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. An information processing device comprising:
a bit range determination unit configured to determine a plurality of bit ranges after quantization for at least one of a plurality of types of variables to be used in a neural network;
a recognition rate calculation unit configured to calculate a plurality of recognition rates of the neural network by using each of a plurality of variable groups which includes the plurality of types of variables, and in which a bit range of at least one of the plurality of types of variables is different; and
a variable determination unit configured to determine to use a variable group of the plurality of variable groups, the variable group having a maximum recognition rate among the plurality of calculated recognition rates, for calculation of the neural network.

2. The information processing device according to claim 1, wherein the information processing device further comprises a statistical information acquisition unit configured to execute the calculation of the neural network in such a manner that the calculation is executed in a plurality of calculation cycles each of which includes a group determination period and a calculation execution period, and
wherein the recognition rate calculation unit and the variable determination unit are operated in the group determination period, and
in each of the plurality of calculation cycles, the statistical information acquisition unit is configured to execute the calculation in the calculation execution period by using the variable group determined in the group determination period.

3. The information processing device according to claim 1 or 2, wherein the bit range determination unit is configured to determine, based on distribution of most significant bits when a determination target variable of the plurality of bit ranges is represented by a fixed-point number, the plurality of bit ranges from the most significant bit side of the distribution.

4. The information processing device according to claim 3, wherein the information processing device further comprises a quantization error calculation unit configured to calculate quantization errors when the determination target variable of the plurality of bit ranges is quantized in the plurality of bit ranges, and
the bit range determination unit is configured to determine the plurality of bit ranges from the most significant bit side of the distribution in ascending order of the calculated quantization errors.

5. The information processing device according to any preceding claim, wherein the statistical information acquisition unit is configured to execute learning of the neural network by using the determined variable group having the maximum recognition rate.

6. The information processing device according to any preceding claim, wherein the statistical information acquisition unit is configured to execute inference of the neural network by using the determined variable group having the maximum recognition rate.

7. An information processing method for causing a processor included in an information processing device to execute a process, the process comprising:
determining a plurality of bit ranges after quantization for at least one of a plurality of types of variables to be used in a neural network;
calculating a plurality of recognition rates of the neural network by using each of a plurality of variable groups which includes the plurality of types of variables, and in which a bit range of at least one of the plurality of types of variables is different; and
determining to use a variable group of the plurality of variable groups, the variable group having a maximum recognition rate among the plurality of calculated recognition rates, for calculation of the neural network.

8. A program for causing a computer to execute a process, the process comprising:
determining a plurality of bit ranges after quantization for at least one of a plurality of types of variables to be used in a neural network;
calculating a plurality of recognition rates of the neural network by using each of a plurality of variable groups which includes the plurality of types of variables, and in which a bit range of at least one of the plurality of types of variables is different; and
determining to use a variable group of the plurality of variable groups, the variable group having a maximum recognition rate among the plurality of calculated recognition rates, for calculation of the neural network.
